(19) Europäisches Patentamt
European Patent Office
Office européen des brevets

(11) **EP 3 936 710 B1**

(12) **EUROPEAN PATENT SPECIFICATION**

(45) Date of publication and mention
of the grant of the patent:
**12.04.2023 Bulletin 2023/15**

(21) Application number: **20425021.1**

(22) Date of filing: **06.07.2020**

(51) International Patent Classification (IPC):
$F02C\ 7/04^{(2006.01)}$ $\qquad$ $F04D\ 29/42^{(2006.01)}$
$F04D\ 29/54^{(2006.01)}$

(52) Cooperative Patent Classification (CPC):
**F02C 7/04; F04D 29/4213; F04D 29/441;
F04D 29/547;** F05D 2250/51; F05D 2270/173

(54) **AIR INTAKE FOR A STATIONARY GAS TURBINE ENGINE**

LUFTEINLASS FÜR EIN STATIONÄRES GASTURBINENTRIEBWERK

ENTRÉE D'AIR POUR UN MOTEUR À TURBINE À GAZ FIXE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.01.2022 Bulletin 2022/02**

(73) Proprietor: **ANSALDO ENERGIA S.p.A.**
**16152 Genova (IT)**

(72) Inventor: **Tappani, Marco**
**16152 Genova (IT)**

(74) Representative: **Bernotti, Andrea et al**
**Studio Torta S.p.A.**
**Via Viotti, 9**
**10121 Torino (IT)**

(56) References cited:
**WO-A1-2008/111098      WO-A2-2009/052170
US-A1- 2010 172 753      US-A1- 2018 266 436**

## Description

TECHNICAL FIELD

The present invention relates to an air intake for a stationary gas turbine engine and to a stationary gas turbine engine.

BACKGROUND

As known, stationary gas turbines engines are provided with air intakes that guide an airflow to an inlet of a compressor, which is normally of the axial type. Air intakes are designed to optimize air feed to the compressor in terms of mass flow, speed and direction over a broad range of operating conditions. Air intakes generally comprise air louvers, air filters, an horizontal duct also called "white room", silencers, a vertical duct section, which includes a lower end conveyor and a feed opening coupled with the compressor inlet.

Prior art air intakes are disclosed in documents US2018/266436A1, US2010/172753A1, WO2009/052170A2 and WO2008/111098A1.

One problem often associated with known air intakes resides in that the conditions of the airflow are not homogeneous around the feed opening and the inlet guide vanes of the first compressor stage. For example, air speed is higher in the upper part of the feed passage than in the lower part, where flow stagnation, recirculation and vortices may take place. Difference in amplitude and direction of speed may result in dangerous deviations of the angle of attack at the inlet guide vanes and, as a consequence, flow separation that may propagate along the compressor. Flow separation not only affects performance and efficiency of the gas turbine engines, but may also cause critical conditions and major problems, such as forced shutdown and engine damage. Hence, poor air feed may lead to serious risks for the operability, performance and lifetime of the engine components.

SUMMARY OF THE INVENTION

It is thus an object of the present invention to provide an air intake for a stationary gas turbine engine and a stationary gas turbine engine that allow to overcome or at least attenuate the above described limitations.

According to the present invention, there is provided an air intake for a stationary gas turbine engine comprising a vertical duct having a front wall, a rear wall, side walls and a feed opening in the rear wall, the front wall and the rear wall being flat and parallel to each other; wherein the side walls define:

a divergent diffuser section of the vertical duct, configured to slow down an inlet airflow flowing through the vertical duct; and
a convergent conveyor section of the vertical duct, arranged downstream of the divergent diffuser section and around the feed opening and configured to redirect part of the airflow toward the feed opening; and wherein in the divergent diffuser section the side walls are configured to deflect the airflow away from a longitudinal median plane of the vertical duct by Coanda effect, whereby separation of the airflow from the side walls is prevented.

The divergent diffuser section brings about a twofold advantageous effect. In the first place, the speed of the airflow is generally reduced, thus also reducing differences in feed conditions around the feed opening. In addition, part of the airflow is actively deflected away by the curved side walls by Coanda effect and is therefore diverted from the upper portion of the feed opening. The diverted part of the airflow then is redirected toward the feed opening by the convergent conveyor section of the vertical duct, instead of directly reaching the feed opening from above. At the same time, deflection by Coanda effect avoids flow separation and does not require additional elements in the flow channel, such as baffles or flow guides. Such elements would be likely cause critical flow conditions, possible turbulence and pressure loss. As a result, conditions of air supply to the first stage of the axial compressor are equalized over the whole feed opening and differences are attenuated, as well as stagnation and flow recirculation. Performance and efficiency are thus increased and potentially critical conditions which could be detrimental for operability and lifetime of components are avoided.

The size of the vertical duct and space occupied are relatively small because of the flat and parallel front wall and rear wall. This is important as the air intake is often arranged in a space between the gas turbine engine and an electric power generator, e.g. an alternator, driven by the gas turbine engine.

According to an aspect of the invention, the side walls are configured to impart respective opposite rotations to respective portions of the airflow.

The opposite rotations help symmetrically and homogeneously spread the airflow in the divergent diffuser section and collect airflow components in the convergent conveyor section after passing next to the feed opening.

According to an aspect of the invention, the side walls have respective curved divergent portions in the divergent diffuser section and a local divergent radius of curvature of the curved divergent portions is selected to prevent flow separation in the divergent diffuser section at a maximum rated speed of the inlet airflow.

Flow separation is thus avoided even in the worst flow conditions and, therefore, over the whole operating range of the associated gas turbine engine.

According to an aspect of the invention, the side walls have respective straight divergent portions in the divergent diffuser section, downstream of the respective curved divergent portions.

Use of straight divergent portions makes design of the vertical duct more flexible. The straight divergent portions may be introduced in accordance with design preferences to obtain desired divergence also in relation to the height of the divergent diffuser section. Straight portions do not entail substantial risk of flow separation.

According to an aspect of the invention, the side walls have respective convergent curved portions with a local convergent radius of curvature in the convergent conveyor section, wherein a ratio of a maximum of the local divergent radius of curvature to a minimum of the local convergent radius of curvature is comprised between 0.5 and 10.

The shape of the convergent conveyor section allows to collect and redirect the airflow deflected in the divergent diffuser section without creating turbulence and optimizing feed of the compressor of the associated gas turbine engine.

According to an aspect of the invention, the convergent conveyor section comprises a conveyor bump, symmetrically arranged with respect to the longitudinal median plane of the vertical duct.

According to an aspect of the invention, the conveyor bump projects toward the feed opening from a bottom of the vertical duct.

The bump helps redirect the airflow collected by the convergent conveyor section toward the feed opening without creating turbulence.

According to an aspect of the invention, the conveyor bump has a rounded summit with a bump radius of curvature and joins the side walls through respective curved base connections having equal base radii of curvature.

According to an aspect of the invention, a ratio of the bump radius of curvature to each of the base radii of curvature is comprised between 0.9 and 1.1 and the bump radius of curvature and the base radii of curvature are preferably equal to or greater than 200 mm.

Positive effect of the bump is thus optimized. Moreover, due to the shape of the divergent diffuser section and of the convergent conveyor section, the airflow reaching the zone of the bump is relatively ordered and has low turbulence. Thus, a little and smooth bumper provides sufficient redirection of the flow and causes negligible loss of pressure, which instead could be substantial with guiding elements such as cusps o separators.

According to an aspect of the invention, the divergent diffuser section has a minimum width at an upstream end, a maximum width at a downstream end and a diffuser height from the upstream end to the downstream end and a divergence parameter is between 0.02 and 0.5, preferably between 0.05 and 0.2, the divergence parameter being defined by

$$D = \frac{WMax - WMin}{2HDiff}$$

WMax, WMin and HDiff being the maximum width, the minimum width and the diffuser height of the divergent diffuser section, respectively.

The lower extreme of the range is sufficient to cause an appreciable deflection of the airflow and a consequent improvement in conditions of the airflow fed to the compressor. Within the upper extreme, safe conditions are defined, which prevent separation of the airflow.

According to an aspect of the invention, the maximum width is not greater than twice the minimum width.

The risk of separation is thus negligible.

According to an aspect of the invention, the feed opening is symmetrically arranged with respect to the longitudinal median plane.

According to an aspect of the invention, the side walls are specularly symmetrical with respect to the longitudinal median plane.

Symmetry of the arrangement favors homogeneous feed conditions and is less at risk of undesired effects such as turbulence.

According to an aspect of the invention, the vertical duct comprises an inlet section upstream of the divergent diffuser section, the side walls being straight and parallel in the inlet section.

According to an aspect of the invention, the air intake further comprises air louvers, air filters, silencers and an horizontal duct upstream of the vertical duct.

According to an aspect of the invention, there is also provided a stationary gas turbine engine comprising:

an air intake as defined above;
an axial compressor, having a compressor inlet coupled to the air intake and configured to receive an inlet airflow from the air intake.

BRIEF DESCRIPTION OF THE DRAWINGS

The present invention will now be described with reference to the accompanying drawings, which illustrate some non-limitative embodiments thereof, in which:

- figure 1 is a schematic view of a power plant;
- figure 2 is a cross-sectional front view, taken along the line II-II of figure 1, of a portion of an air intake included in the power plant of figure 1 and made in accordance to an embodiment of the present invention;
- figure 3 shows an enlarged detail of a portion of the vertical duct of figure 2;
- figure 4 is a cross-sectional front view of a portion of an air intake for a stationary gas turbine engine and made in accordance to a different embodiment of the present invention; and
- figure 5 is a cross-sectional front view of a portion of an air intake for a stationary gas turbine engine and made in accordance to another embodiment of the present invention.

DETAILED DESCRIPTION OF EXEMPLARY EMBODIMENTS

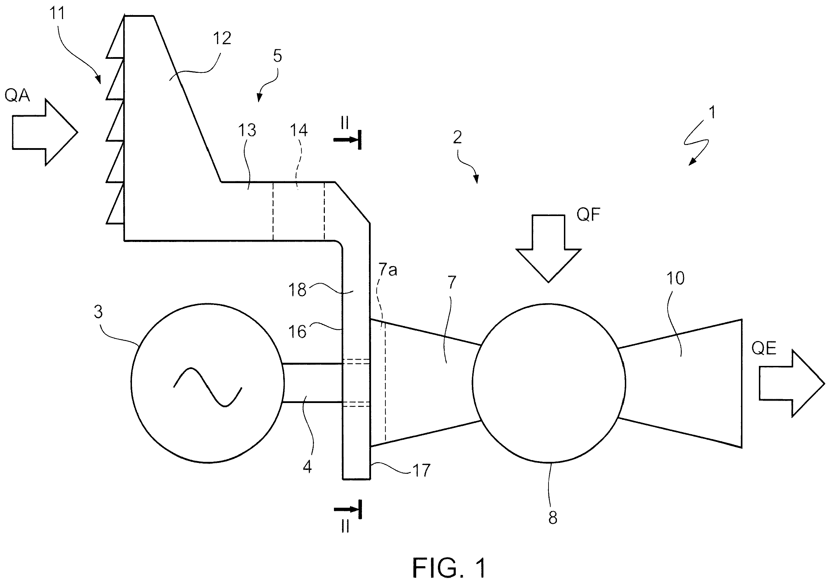

With reference to figure 1, a power plant is indicated by numeral 1 and comprises a stationary gas turbine engine 2 and an alternator 3 driven by a shaft 4 of the gas turbine engine 2. The stationary gas turbine engine 2 in turn comprises an air intake 5, a compressor 7 of the axial type, a combustion chamber 8 and a turbine 10.

An inlet of the compressor 7, specifically a first stage of orientable inlet guide vanes 7a, is coupled to the air intake 5 for receiving an inlet airflow QA, which is added with fuel flow QF and burned in the combustion chamber 8. A flow of exhaust gas QE is expanded in the turbine 10 to extract mechanical energy which is used to drive the alternator 3.

The inlet airflow QA is supplied to the compressor 7 through the air intake 5, which is in part arranged about the shaft 4 between the alternator 3 and the compressor 7.

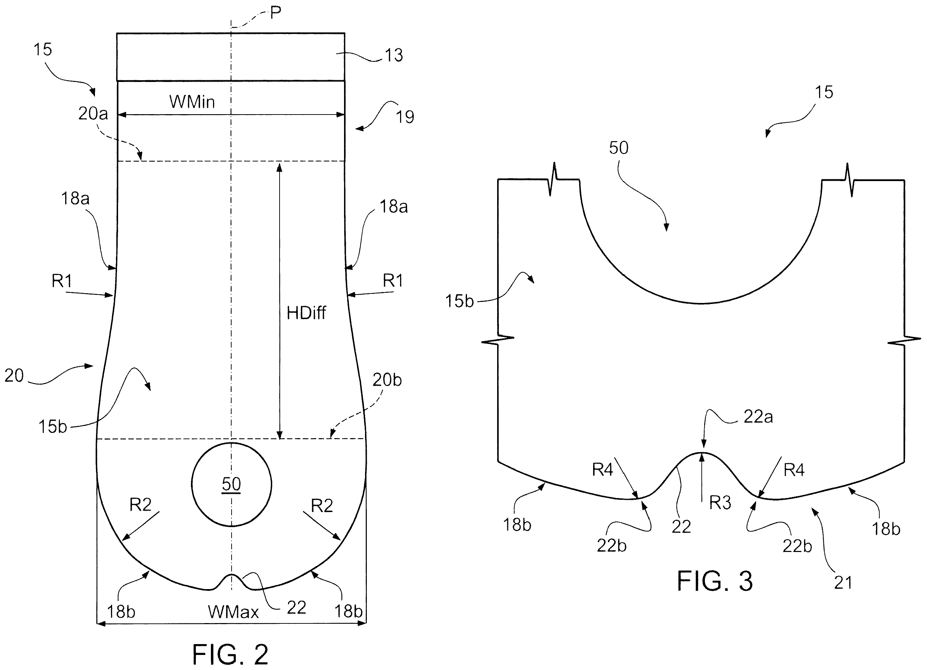

In one embodiment of the present invention, the air intake 5 comprises air louvers 11, a filtering section 12, an horizontal duct 13 and a vertical duct 15. Air is sucked from outside through the air louvers 11 and the filtering section 12, flows through the horizontal duct 13 and the vertical duct 15 and is delivered to the compressor 7 through a feed opening 50 provided in the vertical duct 15, as illustrated in figure 2. Silencers 14 (figure 1) may be arranged either in the horizontal duct 13, as in the embodiment of figures 1 and 2, or in the vertical duct 15, in accordance with design preferences.

The vertical duct 15 is arranged between the alternator 3 and the compressor 7 and has a front wall 16, facing the alternator 3, a rear wall 17, facing the compressor 7, and side walls 18 (figure 2). The front wall 16 and the rear wall 17 are flat and parallel to each other, as illustrated in figure 1. The side walls 18 are specularly symmetrical with respect to a longitudinal median plane P of the vertical duct 15.

The vertical duct 15 comprises an inlet section 19, a divergent diffuser section 20 and a convergent conveyor section 21, arranged in succession in a flow direction of the inlet air flowing through the air intake 5.

In the inlet section 19, which is connected to the horizontal duct 13 through a bend, the side walls 18 are straight and parallel to each other. Moreover, in the inlet section 19, the vertical duct 15 has a minimum width WMin. In one embodiment not shown, the inlet section is not present and the divergent diffuser section 20 is directly connected to the bend and to the horizontal duct 13.

In the divergent diffuser section 20 the side walls 18 have curved divergent portions 18a configured to impart opposite divergent rotations to respective portions of the inlet airflow QA. In the convergent conveyor section 21, the side walls 18 have curved convergent portions 18b, configured to impart respective convergent opposite rotations to respective portions of the inlet airflow QA, thus opposite to each other and opposite to the curved divergent portions 18a of the respective side wall 18.

The divergent diffuser section 20 is configured to slow down the inlet airflow QA flowing through the vertical duct 15. Specifically, in the divergent diffuser section 20 the side walls 18 are configured to deflect part of the inlet airflow QA away from the longitudinal median plane P by Coanda effect, so that separation of the airflow from the side walls 18 is prevented. In one embodiment, the divergent curved portions 18a of the side walls 18 extend throughout the whole divergent diffuser section 20. A local divergent radius of curvature R1 of the side walls 18 is in any case selected to prevent flow separation in the divergent diffuser section 20 at a maximum rated speed of the inlet airflow QA. The term "divergent" applied to the radius of curvature is to be understood as meaning that the curvature of the side walls 18 is such that a fraction of the inlet airflow QA flowing along the side walls 18 is deflected away from the longitudinal median plane P. The local divergent radius of curvature R1 need not be constant in the divergent diffuser section 20 and may vary from an upstream end 20a at the junction with the inlet section 19 from a downstream end 20b at the junction with the convergent conveyor section 21.

The divergent diffuser section has the minimum width WMin at the upstream end 20a and a maximum width WMax at the downstream end 20b and a diffuser height HDiff from the upstream end 20a to the downstream end 20b. Separation of the airflow from the side walls 18 may be prevented for example if a divergence parameter D defined by

$$D = \frac{WMax - WMin}{2HDiff}$$

is between 0.02 and 0.5 and flow conditions are optimized when the divergence parameter D is between 0.05 and 0.2. Moreover, the maximum width WMax is not greater than twice the minimum width WMin.

The convergent conveyor section 21 of the vertical duct 15 is arranged downstream of the divergent diffuser section 20 and the feed opening 50 is formed in the rear wall 18 in the convergent conveyor section 21 symmetrically with respect to the longitudinal median plane P. Therefore, the convergent conveyor section 21 extends around the feed opening 50.

The convergent conveyor section 21 is configured to redirect part of the inlet airflow QA toward the feed opening 50. Specifically, the convergent conveyor section 21 collects a fraction of the inlet airflow QA which is deflected by the divergent diffuser section 20 and passes by the feed opening 50 without directly entering. To this end, convergent curved portions 18b of the side walls 18 in the convergent conveyor section 21 have a local convergent radius of curvature R2. The term "convergent" applied to the radius of curvature is to be understood as meaning that, locally, the curvature of the side walls 18 is such that a fraction of the inlet airflow QA flowing along the side walls 18 is deflected toward the longitudinal median plane P. Moreover, as the side walls 18 join at the longitudinal median plane P at the bottom of the convergent conveyor section 21, the fraction of the inlet airflow QA is finally redirected toward the feed opening 50 from below. The local convergent radius of curvature R2 may be constant or variable along the convergent curved portions 18b in accordance with design preferences. For example, in the convergent conveyor section 21 the local convergent radius of curvature R2 is selected so that a ratio of a maximum of the local divergent radius of curvature R1 to a minimum of the local convergent radius of curvature R2 is comprised between 0.5 and 10. In some embodiments, here not shown, the convergent curved portions 18b may also include straight portions, in accordance with design preferences.

No edges are provided either in the divergent diffuser section 20 or in the convergent conveyor section 21.

The convergent conveyor section 21 comprises a conveyor bump 22, symmetrically arranged with respect to the longitudinal median plane P of the vertical duct 15. The conveyor bump 22 projects toward the feed opening 50 from a bottom of the convergent conveyor section 21 of the vertical duct 15 and is configured to deflect a portion of the inlet airflow QA upwards to the feed opening 50.

The conveyor bump 22 has a rounded summit 22a with a bump radius of curvature R3 and smoothly joins curved convergent portions 18b of the side walls 18 in the convergent conveyor section 21 through respective curved base connections 22b having equal base radii of curvature R4. Moreover, a ratio of a bump radius of curvature R3 to each of the base radii of curvature R4 is comprised between 0.9 and 1.1 and the radius of curvature R3 and the base radii of curvature R4 are preferably equal to or greater than 200 mm.

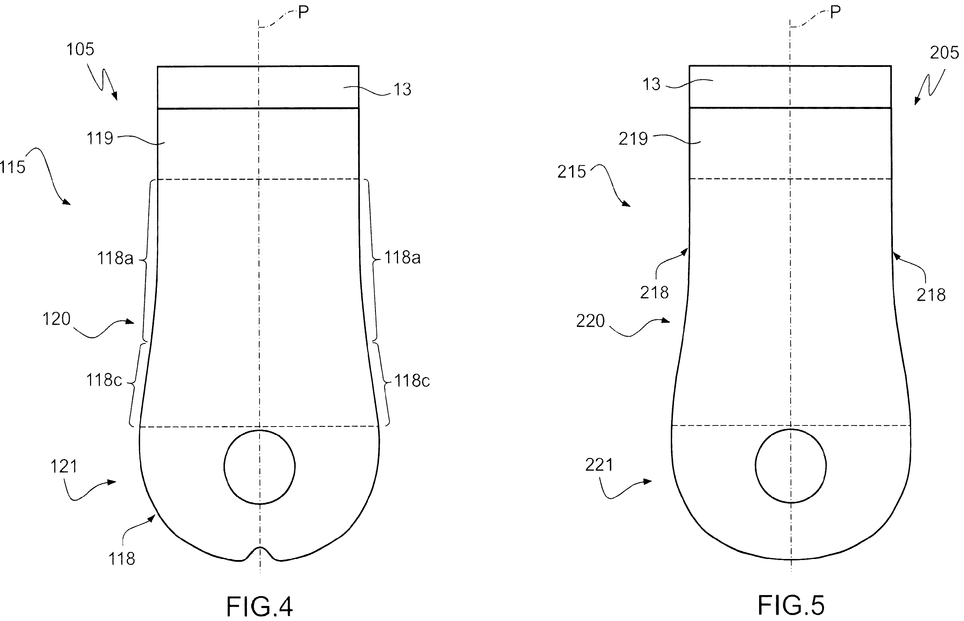

According to an embodiment of the present invention, shown in figure 4, an air intake designated by numeral 105 comprises a vertical duct 115 with side walls 118 in place of the vertical duct 15 of figures 1-3 and is similar for the remainder to the air intake 5 disclosed. The vertical duct 115 has an inlet section 119, a divergent diffuser section 120, and a convergent conveyor section 121 substantially as already discussed for the convergent conveyor section 21 of figures 1-3. In the divergent diffuser section 120, the side walls 118 have respective curved divergent portions 118a and respective straight divergent portions 118c, downstream of the respective curved divergent portions 118a.

According to the embodiment of figure 5, in an air intake 205 for a stationary gas turbine engine a vertical duct 215 has side walls 218 and comprises an inlet section 219, a divergent diffuser section 220 substantially as already described and a convergent conveyor section 221. In the convergent conveyor section 221, the side wall 218 join at the longitudinal median plane P without any bump.

It is finally apparent that changes and variations may be made to the air intake illustrated without departing from the scope of protection of the accompanying claims.

## Claims

1. An air intake for a stationary gas turbine engine, comprising a vertical duct (15; 115; 215) having a front wall (16), a rear wall (17), side walls (18; 118; 218) and a feed opening (50) in the rear wall (17), the front wall (16) and the rear wall (17) being flat and parallel to each other;
   wherein the side walls (18; 118; 218) define:

   a divergent diffuser section (20; 120; 220) of the vertical duct (15; 115; 215), configured to slow down an inlet airflow (QA) flowing through the vertical duct (15; 115; 215); and
   a convergent conveyor section (21; 121; 221) of the vertical duct (15; 115; 215), arranged downstream of the divergent diffuser section (20; 120; 220) and around the feed opening (50) and configured to redirect part of the inlet airflow (QA) toward the feed opening (50);
   the air intake being **characterized in that**
   in the divergent diffuser section (20; 120; 220) the side walls (18; 118; 218) are configured to deflect the inlet airflow (QA) away from a longitudinal median plane (P) of the vertical duct (15; 115; 215) by Coanda effect, whereby separation of the inlet airflow (QA) from the side walls (18; 118; 218) is prevented.

2. The air intake according to claim 1, wherein the side walls (18; 118; 218) are configured to impart respective opposite rotations to respective portions of the inlet airflow (QA).

3. The air intake according to claim 1 or 2, wherein the side walls (18; 118; 218) have respective curved divergent portions (18a; 118a) in the divergent diffuser section (20; 120; 220) and a local divergent radius of curvature (R1) of the curved divergent portions (18a; 118a) is selected to prevent flow separation in the divergent diffuser section (20; 120; 220) at a maximum rated speed of the inlet airflow (QA).

4. The air intake according to claim 3, wherein the side walls (118) have respective straight divergent portions (118c) in the divergent diffuser section (120), downstream of the respective curved divergent portions (118a).

**5.** The air intake according to claim 3 or 4, wherein the side walls (18) have respective convergent curved portions (18b) with a local convergent radius of curvature (R2) in the convergent conveyor section (21; 121; 221), wherein a ratio of a maximum of the local divergent radius of curvature (R1) to a minimum of the local convergent radius of curvature (R2) is comprised between 0.5 and 10.

**6.** The air intake according to any one of claims 3 to 5, wherein the convergent conveyor section (21; 121) comprises a conveyor bump (22), symmetrically arranged with respect to the longitudinal median plane (P) of the vertical duct (15; 115) .

**7.** The air intake according to claim 6, wherein the conveyor bump (22) projects toward the feed opening (50) from a bottom of the vertical duct (15; 115).

**8.** The air intake according to claim 6 or 7, wherein the conveyor bump (22) has a rounded summit (22a) with a bump radius of curvature (R3) and joins the side walls (18) through respective curved base connections (22b) having equal base radii of curvature (R4).

**9.** The air intake according to claim 8, wherein a ratio of the bump radius of curvature (R3) to each of the base radii of curvature (R4) is comprised between 0.9 and 1.1 and the radius of curvature (R3) and the base radii of curvature (R4) are preferably equal to or greater than 200 mm.

**10.** The air intake according to any one of the preceding claims, wherein the divergent diffuser section (20; 120; 220) has a minimum width (WMin) at an upstream end (20a), a maximum width (WMax) at a downstream end (20b) and a diffuser height (HDiff) from the upstream end (20a) to the downstream end (20b) and wherein a divergence parameter (D) is between 0.02 and 0.5, preferably between 0.05 and 0.2, the divergence parameter (D) being defined by

$$D = \frac{WMax - WMin}{2HDiff}$$

WMax, WMin and HDiff being the maximum width, the minimum width and the diffuser height of the divergent diffuser section (20; 120; 220), respectively.

**11.** The air intake according to claim 10, wherein the maximum width (WMax) is not greater than twice the minimum width (WMin).

**12.** The air intake according to any one of the preceding claims, wherein the feed opening (50) is symmetrically arranged with respect to the longitudinal median plane (P) and wherein the side walls (18; 118; 218) are specularly symmetrical with respect to the longitudinal median plane (P) .

**13.** The air intake according to any one of the preceding claims, wherein the vertical duct (15; 115; 215) comprises an inlet section (19; 119; 219) upstream of the divergent diffuser section (20; 120; 220), the side walls (18; 118; 218) being straight and parallel in the inlet section (19; 219) .

**14.** The air intake according to any one of the preceding claims, further comprising air louvers (11), air filters (12), silencers (14) and an horizontal duct (13) upstream of the vertical duct (15; 115; 215).

**15.** A stationary gas turbine engine comprising:

an air intake (5; 105; 205) according to any one of the preceding claims;
an axial compressor (7), having a compressor inlet (7a) coupled to the air intake (5; 105; 205) and configured to receive an inlet airflow (QA) from the air intake (5; 105; 205) .

**Patentansprüche**

**1.** Lufteinlass für einen stationären Gasturbinenmotor, umfassend eine vertikale Leitung (15; 115; 215), die eine Vorderwand (16), eine Rückwand (17), Seitenwände (18; 118; 218) und eine Zufuhröffnung (50) in der Rückwand (17) umfasst, wobei die Vorderwand (16) und die Rückwand (17) flach und parallel zueinander sind,

wobei die Seitenwände (18; 118; 218)
einen divergierenden Diffusorabschnitt (20; 120; 220) der vertikalen Leitung (15; 115; 215), der dafür konfiguriert ist, einen durch die vertikale Leitung (15; 115; 215) fließenden Einlassluftstrom (QA) zu verlangsamen, und einen konvergierenden Förderabschnitt (21; 121; 221) der vertikalen Leitung (15; 115; 215) bilden, der stromabwärts des divergierenden Diffusorabschnitts (20; 120; 220) und um die Zufuhröffnung (50) angeordnet ist und dafür konfiguriert ist, einen Teil des Einlassluftstroms (QA) zu der Zufuhröffnung (50) hin umzuleiten; wobei der Lufteinlass **dadurch gekennzeichnet ist, dass** in dem divergierenden Diffusorabschnitt (20; 120; 220) die Seitenwände (18; 118; 218) dafür konfiguriert sind, den Einlassluftstrom (QA) durch Coanda-Effekt von einer Längsmittelebene (P) der vertikalen Leitung (15; 115; 215) weg abzulenken, wodurch die Trennung des Einlassluftstroms (QA) von den Seitenwänden (18; 118; 218) verhindert wird.

**2.** Lufteinlass nach Anspruch 1, wobei die Seitenwände (18; 118; 218) dafür konfiguriert sind, jeweiligen Anteilen des Einlassluftstroms (QA) jeweils entgegengesetzte Drehungen zu erteilen.

**3.** Lufteinlass nach Anspruch 1 oder 2, wobei die Seitenwände (18; 118; 218) jeweils gebogene divergierende Teile (18a; 118a) in dem divergierenden Diffusorabschnitt (20; 120; 220) haben und ein lokaler divergierender Krümmungsradius (R1) der gebogenen divergierenden Teile (18a; 118a) so gewählt ist, dass er eine Trennung des Stroms in dem divergierenden Diffusorabschnitt (20; 120; 220) bei einer maximalen Geschwindigkeit des Einlassluftstroms (QA) verhindert.

**4.** Lufteinlass nach Anspruch 3, wobei die Seitenwände (118) jeweilige gerade divergierende Teile (118c) in dem divergierenden Diffusorabschnitt (120) stromabwärts der jeweiligen gekrümmten divergierenden Teile (118a) haben.

**5.** Lufteinlass nach Anspruch 3 oder 4, wobei die Seitenwände (18) jeweilige konvergierende gebogene Teile (18b) mit einem lokalen konvergierenden Krümmungsradius (R2) in dem konvergierenden Förderabschnitt (21; 121; 221) haben, wobei ein Verhältnis eines Maximums des lokalen divergierenden Krümmungsradius (R1) zu einem Minimum des lokalen konvergierenden Krümmungsradius (R2) zwischen 0,5 und 10 liegt.

**6.** Lufteinlass nach einem der Ansprüche 3 bis 5, wobei der konvergierende Förderabschnitt (21; 121) eine konvergierende Fördererhebung (22) umfasst, die in Bezug auf die Längsmittelebene (P) der vertikalen Leitung (15; 115) symmetrisch angeordnet ist

**7.** Lufteinlass nach Anspruch 6, wobei die Fördererhebung (22) von einem Boden der vertikalen Leitung (15; 115) zu der Zufuhröffnung (50) hin vorspringt.

**8.** Lufteinlass nach Anspruch 6 oder 7, wobei die Fördererhebung (22) einen gerundeten Gipfel (22a) mit einem Erhebungskrümmungsradius (R3) hat und sich mit den Seitenwänden (18) durch jeweilige gekrümmte Basisverbindungen (22b) mit gleichen Basiskrümmungsradii (R4) verbindet.

**9.** Lufteinlass nach Anspruch 8, wobei ein Verhältnis des Erhebungskrümmungsradius (R3) zu jedem der Basiskrümmungsradii (R4) zwischen 0,9 und 1,1 liegt und der Krümmungsradius (R3) und die Basiskrümmungsradii (R4) vorzugsweise gleich oder größer als 200 mm sind.

**10.** Lufteinlass nach einem der vorhergehenden Ansprüche, wobei der divergierende Diffusorabschnitt (20; 120; 220) eine kleinste Breite (WMin) an einem stromaufwärts liegenden Ende (20a), eine größte Breite (WMax) an einem stromabwärts liegenden Ende (20b) und eine Diffusorhöhe (HDiff) von dem stromaufwärts liegenden Ende (20a) zu dem stromabwärts liegenden Ende (20b) hat und wobei ein Divergenzparameter (D) zwischen 0,02 und 0,5, vorzugsweise zwischen 0,05 und 0,2 liegt, wobei der Divergenzparameter (D) definiert ist durch

$$D = \frac{WMax - WMin}{2HDiff}$$

wobei WMax, WMin und HDiff jeweils die größte Breite, die kleinste Breite und die Diffusorhöhe des divergierenden Diffusorabschnitts (20; 120; 220) sind.

**11.** Lufteinlass nach Anspruch 10, wobei die größte Breite (WMax) nicht größer ist als das Zweifache der kleinsten Breite (WMin).

**12.** Lufteinlass nach einem der vorhergehenden Ansprüche, wobei die Zufuhröffnung (50) in Bezug auf die Längsmittelebene (P) symmetrisch angeordnet ist und wobei die Seitenwände (18; 118; 218) in Bezug auf die Längsmittelebene (P) spiegelsymmetrisch sind.

**13.** Lufteinlass nach einem der vorhergehenden Ansprüche, wobei die senkrechte Leitung (15; 115; 215) einen Einlassabschnitt (19; 119; 219) stromaufwärts des divergierenden Diffusorabschnitts (20; 120; 220) umfasst, wobei die Seitenwände (18; 118; 218) in dem Einlassabschnitt (19; 219) gerade und parallel sind.

**14.** Lufteinlass nach einem der vorhergehenden Ansprüche, ferner umfassend Luftjalousien (11), Luftfilter (12), Schalldämpfer (14) und eine horizontale Leitung (13) stromaufwärts der vertikalen Leitung (15; 115; 215).

**15.** Stationärer Gasturbinenmotor, umfassend:

ein Lufteinlass (5; 105; 205) nach einem der vorhergehenden Ansprüche;
einen Axialverdichter (7), der einen mit dem Lufteinlass (5; 105; 205) gekoppelten Verdichtereinlass (7a) hat und dafür konfiguriert ist, einen Einlassluftstrom (QA) von dem Lufteinlass (5; 105; 205) zu erhalten.

**Revendications**

**1.** Entrée d'air pour un moteur à turbine à gaz fixe, comprenant un conduit vertical (15 ; 115 ; 215) ayant une paroi avant (16), une paroi arrière (17), des parois latérales (18 ; 118 ; 218) et une ouverture d'alimentation (50) dans la paroi arrière (17), la paroi avant (16) et la paroi arrière (17) étant plates et parallèles l'une à l'autre ;

dans lequel les parois latérales (18 ; 118 ; 218) définissent :

une section de diffuseur divergente (20 ; 120 ; 220) du conduit vertical (15 ; 115 ; 215), configurée pour ralentir un flux d'air d'entrée (QA) s'écoulant à travers le conduit vertical (15 ; 115 ; 215) ; et

une section de convoyeur convergente (21 ; 121 ; 221) du conduit vertical (15 ; 115 ; 215), disposée en aval de la section de diffuseur divergente (20 ; 120 ; 220) et autour de l'ouverture d'alimentation (50) et configurée pour rediriger une partie du flux d'air d'entrée (QA) vers l'ouverture d'alimentation (50) ;

l'entrée d'air étant **caractérisée en ce que** dans la section de diffuseur divergente (20 ; 120 ; 220), les parois latérales (18 ; 118 ; 218) sont configurées pour dévier le flux d'air d'entrée (QA) loin d'un plan médian longitudinal (P) du conduit vertical (15 ; 115 ; 215) par effet Coanda, moyennant quoi la séparation du flux d'air d'entrée (QA) des parois latérales (18 ; 118 ; 218) est empêchée.

2. Entrée d'air selon la revendication 1, dans laquelle les parois latérales (18 ; 118 ; 218) sont configurées pour communiquer des rotations opposées respectives à des parties respectives du flux d'air d'entrée (QA).

3. Entrée d'air selon la revendication 1 ou 2, dans laquelle les parois latérales (18 ; 118 ; 218) ont des parties divergentes courbes respectives (18a ; 118a) dans la section de diffuseur divergente (20 ; 120 ; 220) et un rayon de courbure divergent local (R1) des parties divergentes courbes (18a ; 118a) est sélectionné pour empêcher la séparation du flux dans la section de diffuseur divergente (20 ; 120 ; 220) à une vitesse nominale maximale du flux d'air d'entrée (QA).

4. Entrée d'air selon la revendication 3, dans laquelle les parois latérales (118) ont des parties divergentes droites respectives (118c) dans la section de diffuseur divergente (120), en aval des parties divergentes courbes respectives (118a).

5. Entrée d'air selon la revendication 3 ou 4, dans laquelle les parois latérales (18) ont des parties courbes convergentes respectives (18b) avec un rayon de courbure convergent local (R2) dans la section de convoyeur convergente (21 ; 121 ; 221), dans laquelle un rapport d'un maximum du rayon de courbure divergent local (R1) à un minimum du rayon de courbure convergent local (R2) est compris entre 0,5 et 10.

6. Entrée d'air selon l'une quelconque des revendications 3 à 5, dans laquelle la section de convoyeur convergente (21 ; 121) comprend une bosse de convoyeur (22), disposée symétriquement par rapport au plan médian longitudinal (P) du conduit vertical (15 ; 115).

7. Entrée d'air selon la revendication 6, dans laquelle la bosse de convoyeur (22) fait saillie vers l'ouverture d'alimentation (50) depuis un fond du conduit vertical (15 ; 115).

8. Entrée d'air selon la revendication 6 ou 7, dans laquelle la bosse de convoyeur (22) a un sommet arrondi (22a) avec un rayon de courbure de bosse (R3) et rejoint les parois latérales (18) par des connexions de base courbes respectives (22b) ayant des rayons de courbure de base égaux (R4).

9. Entrée d'air selon la revendication 8, dans laquelle un rapport du rayon de courbure de bosse (R3) à chacun des rayons de courbure de base (R4) est compris entre 0,9 et 1,1 et le rayon de courbure (R3) et les rayons de courbure de base (R4) sont de préférence égaux ou supérieurs à 200 mm.

10. Entrée d'air selon l'une quelconque des revendications précédentes, dans laquelle la section de diffuseur divergente (20 ; 120 ; 220) a une largeur minimale (WMin) à une extrémité amont (20a), une largeur maximale (WMax) à une extrémité aval (20b) et une hauteur de diffuseur (HDiff) de l'extrémité amont (20a) à l'extrémité aval (20b) et dans laquelle un paramètre de divergence (D) est compris entre 0,02 et 0,5, de préférence entre 0,05 et 0,2, le paramètre de divergence (D) étant défini par

$$D = \frac{WMax-WMin}{2HDiff}$$

WMax, WMin et HDiff étant la largeur maximale, la largeur minimale et la hauteur de diffuseur de la section de diffuseur divergente (20 ; 120 ; 220), respectivement.

11. Entrée d'air selon la revendication 10, dans laquelle la largeur maximale (WMax) n'est pas supérieure au double de la largeur minimale (WMin).

12. Entrée d'air selon l'une quelconque des revendications précédentes, dans laquelle l'ouverture d'alimentation (50) est disposée symétriquement par rapport au plan médian longitudinal (P) et dans laquelle les parois latérales (18 ; 118 ; 218) présentent une symétrie spéculaire par rapport au plan médian longitudinal (P).

13. Entrée d'air selon l'une quelconque des revendications précédentes, dans laquelle le conduit vertical (15 ; 115 ; 215) comprend une section d'entrée (19 ; 119 ; 219) en amont de la section de diffuseur divergente (20 ; 120 ; 220), les parois latérales (18 ; 118 ; 218) étant droites et parallèles dans la section d'entrée (19 ; 219).

14. Entrée d'air selon l'une quelconque des revendications précédentes, comprenant en outre des évents à lames (11), des filtres à air (12), des silencieux (14) et un conduit horizontal (13) en amont du conduit vertical (15 ; 115 ; 215).

15. Moteur à turbine à gaz fixe comprenant :

une entrée d'air (5; 105; 205) selon l'une quelconque des revendications précédentes ;
un compresseur axial (7), ayant une entrée de compresseur (7a) couplée à l'entrée d'air (5 ; 105 ; 205) et configurée pour recevoir un flux d'air d'entrée (QA) provenant de l'entrée d'air (5 ; 105 ; 205).

FIG. 1

FIG. 2

FIG. 3

105

13

119

115

118a                118a

120

118c                118c

121

118

**FIG.4**

P

205

13

219

215

218

218

220

221

**FIG.5**

P

EP 3 936 710 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018266436 A1
- US 2010172753 A1
- WO 2009052170 A2
- WO 2008111098 A1